# EUROPÄISCHE PATENTSCHRIFT

(11) **EP 2 225 482 B1**
(45) Veröffentlichungstag und Bekanntmachung des Hinweises auf die Patenterteilung: **20.06.2012**
(21) Anmeldenummer: 08864020.6
(22) Anmeldetag: 05.12.2008
(51) Int. Cl.: F16H 45/02, F16H 61/14

(54) **KOPPLUNGSANORDNUNG**
COUPLING ARRANGEMENT
AGENCEMENT D'EMBRAYAGE

(30) Priorität: 21.12.2007 DE 102007061949
(43) Veröffentlichungstag der Anmeldung: 08.09.2010
(73) Patentinhaber: ZF Friedrichshafen AG, 88038 Friedrichshafen (DE)
(72) Erfinder: ADELMANN, Thomas, 97282 Retzstadt (DE); HEULER, Michael, 97080 Würzburg (DE); SUECK, Gregor, 97526 Sennfeld (DE); THIEDE, Andreas, 97525 Schwebheim (DE); WIGGEN, Peter, 97506 Grafenrheinfeld (DE)
(86) Internationale Anmeldenummer: PCT/EP2008/066856
(87) Internationale Veröffentlichungsnummer: WO 2009/080467

(56) Entgegenhaltungen:
- EP-A- 1 843 062
- WO-A-2006/108484
- WO-A-2007/048505
- DE-A1- 4 423 640
- FR-A- 2 839 128

## Beschreibung

Die Erfindung bezieht sich auf eine Kopplungsanordnung entsprechend dem Oberbegriff des Anspruches 1.

Eine solche Kopplungsanordnung ist aus der WO 2007/048505 A1 bekannt. Die als hydrodynamischer Drehmomentwandler mit einem aus Pumpen-, Turbinen- und Leitrad gebildeten hydrodynamischen Kreis ausgebildete Kopplungsanordnung verfügt über ein Kupplungsgehäuse, das eine Kupplungsvorrichtung in Form einer Überbrückungskupplung umfasst. Die Kupplungsvorrichtung besteht aus antriebsseitigen, radial außen angeordneten Kupplungselementen, die in einen Kupplungselementen-Außenträger drehfest eingreifen, sowie aus abtriebsseitigen, radial innen angeordneten Kupplungselementen, die mit einem Kupplungselementen-Innenträger in drehfester Verbindung stehen. Ein Anpresselement in Form eines Kolbens ist in Einrückposition in Wirkverbindung mit den Kupplungselementen bringbar, in Ausrückposition dagegen von den Kupplungselementen trennbar. Ferner ist eine die Kraftwirkung des Anpresselementes aufnehmende Anpresselementen-Aufnahme vorgesehen, die durch einen in den Kupplungselementen-Außenträger eingreifenden Sprengring gebildet ist. Das Kupplungsgehäuse selbst ist durch das Anpresselement in zwei Räume trennbar, nämlich in einen Anpresselementen-Druckraum mit wenigstens einer für den Ein- oder Ausrückvorgang zu- oder abschaltbaren Einrück-Druckmittelleitung, und in einen Kupplungselementen-Kühlungsraum mit einer Druckmittel-Zuführungsleitung und einer Druckmittel-Abführungsleitung. Dem Anpresselement ist eine zumindest in dessen Einrückposition wirksame Druckmittelpassage zwischen dem Anpresselementen-Druckraum und dem Kupplungselementen-Kühlungsraum zugeordnet, die für eine Zuführung von Druckmittel aus dem Anpresselementen-Druckraum unmittelbar zu den Kupplungselementen der Kupplungsvorrichtung sorgt, und damit den Zweck einer Kühlung der Kupplungselemente erfüllt.

Üblicherweise ist die Druckmittel-Zuführungsleitung bei einem derartigen Dreileitungs-System im Axialbereich zwischen dem Anpresselement der Kupplungsvorrichtung und dem Turbinenrad, also benachbart zum Anpresselement vorgesehen, die Druckmittel-Abführungsleitung dagegen im Axialbereich des Pumpenrades, also entfernt vom Anpresselement. Die Druckmittel-Zuführungsleitung kann, bedingt durch Einflüsse des getriebeseitigen Versorgungssystems, bezüglich ihres Druckniveaus erheblichen Schwankungen unterworfen sein, während die Druckmittel-Abführungsleitung mit einem zumindest im wesentlichen konstanten Druckniveau beaufschlagt ist. Wegen der räumlichen Nähe der Druckmittel-Zuführungsleitung zum Anpresselement ergeben sich aufgrund der Druckschwankungen Einregelungsprobleme für das Anpresselement während des Einrückvorganges, da dem hierbei im Anpresselementen-Druckraum aufgebauten Überdruck an der Gegenseite des Anpresselementes ein sich ändernder Druck entgegenwirkt. Die Folge kann ein unregelmäßiges oder gar ruckbehaftetes Einrücken des Anpresselementes sein.

Auch im Hinblick auf den Kupplungselementen-Kühlungsraum entstehen bei einem derartigen Dreileitungs-System problematische Betriebszustände: Wenn die Druckmittelleitungen zum Einrücken der Kupplungsvorrichtung und damit zur Druckbeaufschlagung des Anpresselementen-Druckraums entsprechend geschaltet werden, liegt an der Druckmittel-Zuführungsleitung kurzzeitig kein Überdruck an. Dies hat zur Folge, dass der Druck im Kupplungselementen-Kühlungsraum kurzzeitig zusammenbricht, woraufhin insbesondere an der bei Zugbetrieb für Kavitation kritschen Stelle zwischen dem Strömungsausgang des Leitrades und dem Strömungseingang des Pumpenrades Kavitation auftritt. Die hierdurch bedingte, schlagartige Ausgasung der Luft aus dem Druckmittel hat eine erhebliche Verdrängung von Druckmittel aus dem Kupplungselementen-Kühlungsraum zur Folge. Sobald im Anschluss an diesen Umschaltvorgang über die Druckmittel-Zuführungsleitung wieder ein geringer Überdruck im Kupplungselementen-Kühlungsraum aufgebaut ist, verschwindet die Kavitation, so dass sich, verstärkt durch den zuvor erlittenen Verlust an Druckmittel, ein Mangel an Druckmittel im Kupplungselementen-Kühlungsraum bemerkbar macht, der wieder ausgeglichen werden muss.

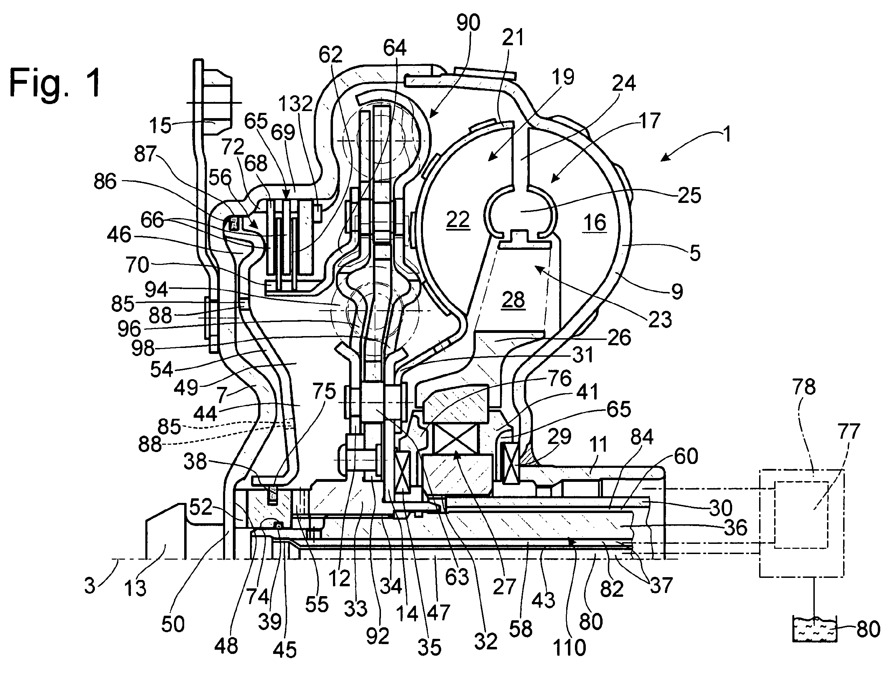

Die in der DE 44 23 640 A1 behandelte Kopplungsanordnung ist ebenfalls als hydrodynamischer Drehmomentwandler ausgebildet, abweichend von der zuvor behandelten Ausführung allerdings als Zweileitungs-System. Bei einem derartigen Zweileitungssystem trennt ein Anpresselement in Form eines Kolbens einen Anpresselementen-Druckraum von einem hydrodynamischen Kreis, gebildet durch Pumpenrad, Turbinenrad und Leitrad. Der Anpresselementen-Druckraum ist gemäß Fig. 1 radial außen durch eine Kupplungsvorrichtung mit einem Kupplungselement begrenzt, wobei dieses Kupplungselement axial zwischen dem Anpresselement und einem Gehäusedeckel eines Kupplungsgehäuses angeordnet ist. Da die Kupplungsvorrichtung eine Strömungsverbindung zwischen den beiden Räumen der Kopplungsanordnung, also zwischen Anpresselementen-Raum und hydrodynamischem Kreis herstellt, werden nur zwei Druckmittelleitungen benötigt, nämlich eine Einrück-Druckmittelleitung, die in den Anpresselementen-Raum mündet, und die zum Ausrücken der Kupplungsvorrichtung mit einem Überdruck beaufschlagt wird, und eine Versorgungs-Druckmittelleitung, die zum hydrodynamischen Kreis führt, und die zum Einrücken der Kupplungsvorrichtung mit einem Überdruck beaufschlagt wird.

Eine als Zweileitungs-System ausgebildete Kopplungsanordnung hat den Nachteil, dass insbesondere bei Schubbetrieb ein Regeln des Anpresselementes beim Einrücken ab einer bestimmten Differenzdrehzahl zwischen der Antriebsseite und der Abtriebsseite nicht mehr möglich ist. Schubbetrieb liegt vor, wenn an einem Antrieb, wie der Kurbelwelle einer Brennkraftmaschine, eine geringere Drehzahl als an einem Abtrieb, wie einer Getriebeeingangswelle, anliegt. Die Problematik der Regelbarkeit des Anpresselementes bei einem solchen Betriebszustand erkärt sich wie folgt:

Zum Einrücken der Kupplungsvorrichtung wird im hydrodynamischen Kreis ein Überdruck gegenüber dem Anpresselementen-Druckraum angelegt. Während somit dieses Druckgefälle ein Einrücken des Anpresselementes auszulösen sucht, wirkt die gleichzeitig erfolgende Durchströmung der Reibflächen der Kupplungsvorrichtung zwischen Gehäusedeckel und Kolben mit Druckmittel aus dem hydrodynamischen Kreis diesem Druckgefälle zunächst entgegen. Ein weiter ansteigender Überdruck im hydrodynamischen Kreis hat schließlich zur Folge, dass die Kupplungsvorrichtung schlagartig, und damit ungeregelt, in ihre Einrückposition überführt wird.

Der Erfindung liegt die Aufgabe zugrunde, eine Kopplungsanordnung derart auszubilden, dass sich bei einfachem Aufbau eine hervorragende Regelbarkeit einer Kupplungsvorrichtung beim Einrücken ergibt.

Diese Aufgabe wird durch die Merkmale des Anspruches 1 gelöst. Es führen zwar, ebenso wie bei einem Dreileitungs-System, drei Druckmittelleitungen in ein Kupplungsgehäuse der Kopplungsanordnung, jedoch sind erfindungsgemäß jeweils nur zwei Druckmittelleitungen zugeschaltet, während die jeweils dritte Druckmittelleitung abgeschaltet ist. Obwohl somit jeweils nur zwei Leitungen zugeschaltet sind, ist die Kopplungsanordnung nicht als Zweileitungs-System wirksam, da bei diesem stets die beiden vorgesehenen Druckmittelleitungen aktiv sind. Die erfindungsgemäße Umschaltung von einer ersten Kombination von Druckmittelleitungen auf eine zweite Kombination von Druckmittelleitungen ist demnach bei keinem der bislang bekannten Leitungssysteme einer solchen Kopplungsanordnung bekannt.

Wie nachfolgend gezeigt werden soll, kann bei der erfindungsgemäßen Kopplungsanordnung mit dem vergleichsweise geringen Steuerungsaufwand eines Zweileitungs-Systems eine vorzügliche Regelung der Kupplungsvorrichtung unter allen Betriebsbedingungen gewährleistet werden. Als bevorzugte Betriebsbedingung sei hierbei auf den Einrückzustand der Kupplungsvorrichtung verwiesen, wenn also ein der Kupplungsvorrichtung angehörendes Anpresselement, beispielsweise realisiert als Kolben, seine Einrückposition im Wesentlichen einnimmt. Im Einrückzustand übt das Anpresselement eine Anpresskraft auf wenigstens ein Kupplungselement aus, das sich seinerseits an einer die Kraftwirkung des Anpresselementes aufnehmenden Anpresselementen-Aufnahme abstützt. Sowohl das wenigstens eine Kupplungselement als auch die Anpresselementen-Aufnahme sind hierbei Teile Kupplungsvorrichtung. In der Einrückphase der Kupplungsvorrichtung zur Einstellung des Anpresselementes in seiner Einrückposition macht sich, wie nachfolgend beschrieben wird, die dem Anpresselement zugeordnete, erfindungsgemäße Druckmittelpassage vorteilhaft bemerkbar, und zwar insbesondere bei Zugbetrieb, wenn an einem Antrieb, wie beispielsweise der Kurbelwelle einer Brennkraftmaschine, eine höhere Drehzahl anliegt als an einem Abtrieb, wie beispielsweise einer Getriebeeingangswelle, aber auch bei Schubbetrieb, wenn am Abtrieb eine höhere Drehzahl anliegt als am Antrieb. Weiterhin kann der Ausrückzustand als Betriebsbedingung vorliegen, wenn das Anpresselement zumindest im Wesentlichen seine Ausrückposition einnimmt.

Beginnend mit dem Einrückvorgang bei Zugbetrieb, ist festzustellen, dass zwar durch Umschaltung der Druckbeaufschlagung von der Druckmittel-Zuführungsleitung des Kupplungselementen-Kühlungsraums auf die Einrück-Druckmittelleitung des Anpresselementen-Druckraums kurzzeitig der Überdruck im Kupplungselementen-Kühlungsraum absinken kann, jedoch ist aufgrund der dem Anpresselement zugeordneten Druckmittelpassage stets für eine Speisung des Kupplungselementen-Kühlungsraums mit frischem Druckmittel gesorgt, so dass auf jeden Fall das Zusammenbrechen des Überdrucks und damit die Bildung von Kavitationseffekten wirksam vermieden werden kann, welche ein Verdrängen von Druckmittel aus dem Kupplungselementen-Kühlungsraum auslösen würden. Somit herrscht im Kupplungselementen-Kühlungsraum stets ein relativ gering schwankender Druck vor, so dass, sobald ein Überdruck im Anpresselementen-Druckraum gegenüber dem Kupplungselementen-Kühlungsraum hergestellt ist, ein kontrolliertes Einrücken des Anpresselementes in seine Einrückposition gewährleistet werden kann. Bevorzugt ist hierbei die Druckmittel-Zuführungsleitung in größerem Abstand vom Anpresselement angeordnet als die Druckmittel-Abführungsleitung. Hierdurch ergibt sich der Vorteil einer nochmals verbesserten Regelbarkeit des Einrückvorganges, da Druckschwankungen an der Druckmittel-Zuführungsleitung, bedingt durch Einflüsse des getriebeseitigen Versorgungssystems, durchaus üblich sind, sich auf den Einrückvorgang aber nicht nachteilig auswirken können. Statt dessen ist dem Anpresselement benachbart die Druckmittel-Abführungsleitung zugeordnet, an welcher üblicherweise nur geringe Druckschwankungen zu verzeichnen sind.

Zur Funktion der Druckmittelpassage ist folgendes anzumerken:

Bei Zugbetrieb liegt im Kupplungselementen-Kühlungsraum wegen der Anwesenheit abtriebsseitiger Elemente, wie abtriebsseitiger Kupplungselemente oder eines Kupplungselementen-Innenträgers, gegebenenfalls auch eines Torsionsschwingungsdämpfers und/oder eines Turbinenrades, ein geringeres Drehzahlniveau und damit ein geringerer Fliehkraftdruck vor als im Anpresselementen-Druckraum, in welchem das Drehzahlniveau und damit der Fliehkraftdruck im wesentlichen durch das benachbarte, der Antriebsseite zugeordnete Gehäuse, beispielsweise in Form eines Gehäusedeckels realisiert, bestimmt ist. Der höhere Fliehkraftdruck im Anpresselementen-Druckraum bewirkt auch dann, wenn die Einrück-Druckmittelleitung noch nicht zugeschaltet ist, einen Überdruck im Anpresselementen-Druckraum gegenüber dem Kupplungselementen-Kühlungsraum. Hierdurch bedingt, liegt im Einrückzustand unabhängig vom Druckaufbau in der Einrück-Druckmittelleitung immer eine Durchströmung der Druckmittelpassage und damit eine Speisung des Kupplungselementen-Kühlungsraums aus dem Anpresselementen-Druckraum vor. Die Versorgung des Kupplungselementen-Kühlungsraums mit Druckmittel über die Druckmittelpassage ist gerade im Einrückzustand bei Zugbetrieb wichtig, da bei diesem Betriebszustand insbesondere beim Umschalten der Druckversorgung von der Druckmittel-Zuführungsleitung auf die Einrück-Druckmittelleitung das Riskio eines Absinkens des Druckniveaus im Kupplungselementen-Kühlungsraum und damit die Gefahr der Kavitation besteht.

Für diesen Betriebszustand ist es vorteilhaft, wenn die Druckmittelpassage im äußeren Radialbereich des Anpresselementes angeordnet ist, da der Fliehkraftdruck in diesem Radialbereich unabhängig vom Schaltzustand der Einrück-Druckmittelleitung im Anpresselementen-Druckraum höher ist als im Kupplungselementen-Kühlungsraum.

Bei Schubbetrieb liegt im Kupplungselementen-Kühlungsraum wegen der Anwesenheit antriebsseitiger Elemente, wie antriebsseitiger Kupplungselemente oder eines Kupplungselementen-Außenträgers, ein höheres Drehzahlniveau und damit ein höherer Fliehkraftdruck als im Anpresselementen-Druckraum vor. Um zu vermeiden, dass Druckmittel aufgrund dieses Gefälles an Fliehkraftdruck aus dem Kupplungselementen-Kühlungsraum durch die Druckmittelpassage in den Anpresselementen-Druckraum abströmt, ist es bei diesem Betriebszustand vorteilhaft, wenn die Druckmittelpassage im inneren Radialbereich des Anpresselementes angeordnet ist, da der Fliehkraftdruck in diesem Radialbereich von geringerer Bedeutung ist als der Druck, der mittels der Einrück-Druckmittelleitung im radial inneren Bereich des Anpresselementen-Druckraums erzeugt wird, da die Einrück-Druckmittelleitung üblicherweise von radial innen aus in den Anpresselementen-Druckraum mündet. Zwar kann unmittelbar beim Umschalten der Druckversorgung von der Druckmittel-Zuführleitung auf die Einrück-Druckmittelleitung des Anpresselementen-Druckraums zumindest kurzzeitig die Versorgung des Kupplungselementen-Kühlungsraums über die Einrück-Druckmittelleitung enden, jedoch ist das Risiko einer Kavitation im Kupplungselementen-Kühlungsraum bei Schubbetrieb ungleich geringer als bei Zugbetrieb.

Wie bereits erläutert, ist für den Einrückzustand die Druckleitung des Anpresselementen-Druckraums zugeschaltet. Das Druckmittel strömt nach Eintritt in den Anpresselementen-Druckraum nach radial außen. Ein Teil dieses Druckmittels tritt über die Druckmittelpassage in den Kupplungselementen-Kühlungsraum über, um von dort aus, gegebenenfalls unter Umgehung des Bereichs der Kupplungsvorrichtung, eines eventuell vorhandenen Torsionsschwingungsdämpfers oder eines hydrodynamischen Kreises, gebildet durch ein Pumpenrad, ein Turbinenrad sowie eventuell eines Leitrades, unmittelbar zur Druckmittel-Abführungsleitung zu strömen, und an dieser Stelle den Kupplungselementen-Kühlungsraum zu verlassen.

Für die Einstellung des Ausrückzustandes wird die dem Anpresselementen-Druckraum zugeordnete Druckleitung abgeschaltet, und statt dessen die Druckmittel-Zuführungsleitung zugeschaltet. Ein wesentlicher Teil des über die Druckmittel-Zuführungsleitung in den Kupplungselementen-Kühlungsraum verlässt denselben über die Druckmittel-Abführungsleitung. Ein Restanteil kann allerdings, da bei diesem Betriebszustand der Anpresselementen-Druckraum nicht über seine Einrück-Druckmittelleitung versorgt wird, vom Kupplungselementen-Kühlungsraum über die Druckmittelpassage in den Anpresselementen-Druckraum abströmen. Um dies zu vermeiden, kann der Druckmittelpassage eine bei diesem Betriebszustand wirksame Verschlussvorrichtung zugeordnet sein, die beispielsweise als Abdichtung oder als Ventilvorrichtung ausgebildet ist.

Die Druckmittelpassage kann anspruchsgemäß im Anpresselement und/oder in einem dem Anpresselement benachbarten Gehäuse- oder Kupplungsbauteil vorgesehen sein, kann aber ebenso auch in einer dem Anpresselement zugewiesenen Abdichtung ausgeführt sein. Nähere Hinweise hierzu geben die Ansprüche.

Mit Vorzug wirkt das Anpresselement mit einem in Richtung zur Ausrückposition wirksamen Vorspannelement zusammen, da dieses Vorspannelement zum einen die Regelbarkeit beim Einrücken nochmals verbessert, und zum anderen in vorteilhafter Weise eine Wirkverbindung der Druckmittelpassage mit der ihr zugeordneten Verschlussvorrichtung begünstigt.

Im Folgenden wird ein Ausführungsbeispiel für die Erfindung angegeben. Es zeigt im Einzelnen:
- Fig. 1: die obere Hälfte eines Längsschnittes durch ein Kupplungsgehäuse einer Kopplungsanordnung, die eine Kupplungsvorrichtung und eine Mehrzahl von Druckmittelleitungen aufweist, wobei die Kupplungsvorrichtung zum Ein- oder Ausrücken über ein Anpresselement verfügt dem ein Durchlass für Druckmittel zwischen einem Anpresselementen-Druckraum und einem Kupplungselementen-Kühlungsraum zugeordnet ist,
- Fig. 2: eine vergrößerte Herauszeichnung des in Fig. 1 gezeigten Anpresselementes, dem eine Verschlussvorrichtung für den Durchlass zugeordnet ist,
- Fig. 3: eine vergrößerte Herauszeichnung der Verschlussvorrichtung,
- Fig. 4: wie Fig. 2, aber mit einer Ventileinrichtung als Verschlussvorrichtung für den Durchlass,
- Fig. 5: wie Fig. 2, aber mit einer Abdichtung als Verschlussvorrichtung, in Ausrückposition gezeigt,
- Fig. 6: wie Fig. 5, aber in Einrückposition,
- Fig. 7: wie Fig. 5, aber mit anderer Abdichtung, in Ausrückposition,
- Fig. 8: wie Fig. 7, aber in Einrückposition,
- Fig. 9: wie Fig. 5, aber mit anderer Abdichtung, in Ausrückposition,
- Fig. 10: wie Fig. 9, aber in Einrückposition,
- Fig. 11: wie Fig. 5, aber mit anderer Abdichtung, in Ausrückposition,
- Fig. 12: wie Fig. 5, aber mit anderer Abdichtung, in Einrückposition,
- Fig. 13: wie Fig. 5, aber mit anderer Abdichtung, in Ausrückposition.

In Fig. 1 ist eine Kopplungsanordnung 1 dargestellt, ausgebildet als hydrodynamischer Drehmomentwandler. Die Kopplungsanordnung 1 weist ein Kupplungsgehäuse 5 auf, das um eine Drehachse 3 Rotationsbewegungen auszuführen vermag. Das Kupplungsgehäuse 5 verfügt an seiner einem nicht gezeigten Antrieb, wie beispielsweise einer Kurbelwelle einer Brennkraftmaschine, zugewandten Seite über einen Gehäusedeckel 7, der mit einer Pumpenradschale 9 fest verbunden ist. Diese geht im radial inneren Bereich in eine Pumpenradnabe 11 über.

Zurückkommend auf den Gehäusedeckel 7, weist dieser an seiner dem nicht gezeigten Antrieb zugewandten Seite einen Lagerzapfen 13 auf, der in bekannter und daher nicht näher dargestellter Weise an einem Element des Antriebs, wie beispielsweise der Kurbelwelle, zur antriebsseitigen Aufnahme des Kupplungsgehäuses 5 vorgesehen ist. Weiterhin verfügt der Gehäusedeckel 7 über eine Befestigungsaufnahme 15, die üblicherweise zur Befestigung des Kupplungsgehäuses 5 am Antrieb dient, und zwar vorzugsweise über eine nicht gezeigte Flexplatte. Bezüglich einer zeichnerischen Darstellung der Aufnahme des Lagerzapfens einer Kopplungsanordnung in einer Kurbelwelle eines Antriebs sowie einer Anbindung der Kopplungsanordnung über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über eine Druckscheibe 41 sowie eine Axiallagerung 29 an der Pumpenradnabe 11 axial ab und steht über eine Verzahnung 32 in drehfester, aber axial relativ verschiebbarer Verbindung mit einer Stützwelle 30, die radial innerhalb der Pumpenradnabe 11 angeordnet ist. Die als Hohlwelle ausgebildete Stützwelle 30 ihrerseits umschließt eine als Abtrieb 110 der Kopplungsanordnung 1 dienende Getriebeeingangswelle 36, die mit einer Mittenbohrung 37 versehen ist. Diese Mittenbohrung 37 nimmt eine Hülse 43 auf, und zwar derart, dass die Hülse 43 mittels Abstützbereichen 45 radial in der Mittenbohrung 37 zentriert ist. Mit Axialversatz zu diesen Abstützbereichen 45 bildet die Hülse 43 radial zwischen sich und der umschließenden Wand der Mittenbohrung 37 eine Druckmittel-Abführungsleitung 58 für fluidförmiges Druckmittel aus. Dieser Druckmittel-Abführungsleitung 58 sind Strömungsdurchlässe 55 zugeordnet. Radial innerhalb der Hülse 43 verbleibt eine zentrale Einrück-Druckmittelleitung 47, der Druckmitteldurchlässe 52 zugeordnet sind. Schließlich sei auf die radial zwischen der Pumpenradnabe 11 und der Stützwelle 30 verlaufende Druckmittel-Zuführungsleitung 84 verwiesen, der Druckmitteldurchlässe 65 in der zwischen der bereits erwähnten Axiallagerung 29 und dem Freilauf 27 angeordneten Druckscheibe 41 zugeordnet sind. Die Druckmittel-Zuführungsleitung 84 mündet ebenso wie die Druckmittel-Abführungsleitung 58 in einem Kupplungselementen-Kühlungsraum 44, dem auch der hydrodynamische Kreis 24 angehört.

Die Getriebeeingangswelle 36 nimmt über eine Verzahnung 34 eine Nabe 33 drehfest, aber axial verschiebbar auf, wobei diese Nabe 33 in einem radial äußeren Bereich zur Befestigung einer abtriebsseitigen Nabenscheibe 92 eines Torsionsschwingungsdämpfers 90 dient. Diese Nabenscheibe 92 wirkt über einen Umfangsfedersatz 94 mit zwei Deckblechen 96, 98 zusammen, die ebenfalls Teile des Torsionsschwingungsdämpfers 90 sind. Das Deckblech 98 dient zur Aufnahme eines Turbinenradfußes 31 mittels einer Nietverbindung 63, während das andere Deckblech 96 zur Befestigung eines Kupplungselementen-Innenträgers 64 einer Kupplungsvorrichtung 56, die als Lamellenkupplung ausgebildet ist, vorgesehen ist. Die Kupplungsvorrichtung 56 verfügt sowohl über innere Kupplungselemente 66, die über eine am Kupplungselementen-Innenträger 64 vorgesehene Verzahnung 70 drehfest mit demselben sind, als auch über äußere Kupplungselemente 68, die mit den inneren Kupplungselementen 66 über je eine Reibfläche 62 in Wirkverbindung bringbar sind, wobei die äußeren Kupplungselemente 68 über eine als Kupplungselementen-Außenträger 69 wirksame Verzahnung 72 mit dem Gehäusedeckel 7 und damit mit dem Kupplungsgehäuse 5 in Drehverbindung stehen. Die Kupplungsvorrichtung 56 ist mittels eines axial verlagerbaren Anpresselementes 54 ein- oder ausrückbar, dessen auf die Kupplungselemente 66, 68 ausgeübte Kraftwirkung sich an einer ortsfesten Anpresselementen-Aufnahme 132 abstützt, die ebenfalls Teil der Kupplungsvorrichtung 56 ist.

An der vom Kupplungselementen-Kühlungsraum 44 abgewandten Seite des Anpresselementes 54 ist, axial durch denselben sowie durch den Gehäusedeckel 7 begrenzt, ein Anpresselementen-Druckraum 46 vorgesehen. Das Anpresselement 54 ist radial außen im Kupplungsgehäuse 5 zentriert, und gegenüber demselben mittels einer Abdichtung 86 dichtend aufgenommen, die in einer radial äußeren Anpresselementen-Nut 87 aufgenommen ist.

Die Nabe 33, die wegen der Aufnahme des Torsionsschwingungsdämpfers 90, sowie über denselben, mittelbar auch des Turbinenrades 19, nachfolgend als Trägernabe 33 bezeichnet ist, stützt sich einerseits über das Deckblech 98 und eine Lagerung 35, die als Axiallagerung ausgebildet ist, über eine Druckscheibe 76 am Freilauf 27 ab, und kann sich andererseits mit seinem dem Gehäusedeckel 7 zugewandten, einen Axiallagerungsbereich 48 bildenden Ende an einer Axialanlagefläche 50 des Gehäusedeckels 7 axial abstützen, wobei sich diese Axialanlagefläche 50, ausgehend von der Drehachse 3 des Kupplungsgehäuses 5, nach radial außen erstreckt. Innerhalb des Erstreckungsbereiches dieser Axialanlagefläche 50 ist, ausgehend von der Gegenseite des Gehäusedeckels 7 des Kupplungsgehäuses 5, der Lagerzapfen 13 befestigt.

Nach radial innen hin ist die Trägernabe 33 über eine in einer Dichtungsausnehmung 74 aufgenommenen Abdichtung 39 gegenüber der Getriebeeingangswelle 36 abgedichtet, nach radial außen durch eine in einer Dichtungsausnehmung 75 aufgenommenen Abdichtung 38 gegenüber dem Anpresselement 54 der Kupplungsvorrichtung 56. Durch die beiden Abdichtungen 38, 39 werden die Strömungsdurchlässe 52 der Einrück-Druckmittelleitung 47, welche die Trägernabe 33 an ihrem Axiallagerungsbereich 48 durchdringen und mit Vorzug als Nutungen 85 im Axiallagerungsbereich 48 ausgebildet sind, von den Strömungsdurchlässen 55 der Druckmittel-Abführleitung 58, welche im axialen Erstreckungsbereich der Trägernabe 33 zwischen dem Anpresselement 54 und dem Torsionsschwingungsdämpfer 90 ausgebildet sind, getrennt.

Die Einrück-Druckmittelleitung 47 dient zur Herstellung eines Überdruckes im Anpresselementen-Druckraum 46 gegenüber dem Kupplungselementen-Kühlungsraum 44 und damit zur Druckbeaufschlagung des Anpresselementes 54 der Kupplungsvorrichtung 56 zum Einrücken in Richtung zur Anpresselementen-Aufnahme 132, wodurch eine Reibverbindung zwischen den einzelnen Kupplungselementen 66, 68 hergestellt wird. Zur Erzeugung dieses Überdruckes im Anpresselementen-Druckraum 46 gegenüber dem Kupplungselementen-Kühlungsraum 44 ist eine Verbindung der Einrück-Druckmittelleitung 47 mit einer Steuerungs- und/oder Regelungsvorrichtung 78 erforderlich, die mit einem Druckmittel-Vorrat 80 in Verbindung steht. Bei einem Überdruck im Anpresselementen-Druckraum 46 gegenüber dem Kupplungselementen-Kühlungsraum 44 dringt im Anpresselementen-Druckraum 46 enthaltenes Druckmittel über eine im Anpresselement 54 enthaltene Druckmittelpassage 85, ausgebildet als Durchlass 86, in den Kupplungselementen-Kühlungsraum 44, um von dort aus unverzüglich über die Druckmittel-Abführleitung 58 aus dem Kupplungselementen-Kühlungsraum 44 herausgeführt zu werden.

Ebenfalls an die Steuerungs- und/oder Regelungsvorrichtung 78 angeschlossen sind die Druckmittel-Zuführungsleitung 84 und die Druckmittel-Abführungsleitung 58, die mit Vorzug mit einem Zwischenkühler 77 verbunden sind. Die Druckmittel-Zuführungsleitung 84 dient, bei entsprechender Ansteuerung durch die Steuerungs-und/oder Regelungsvorrichtung 78, zur Herstellung eines Überdruckes im Kupplungselementen-Kühlungsraum 44 gegenüber dem Anpresselementen-Druckraum 46, und damit zur Druckbeaufschlagung des Anpresselements 54 zum Ausrücken der Kupplungsvorrichtung 56 in von der Anpresselementen-Aufnahme 132 fortweisender Richtung, wodurch die Reibverbindung zwischen den einzelnen Kupplungselementen 66, 68 gelöst wird.

Fluidförmiges Medium, das über die Druckmittel-Zuführungsleitung 84 in den Kupplungselementen-Kühlungsraum 44 gelangt ist, tritt, nach Kühlung der Kupplungselemente 66, 68 der Kupplungsvorrichtung 56, über die Druckmittel-Abführungsleitung 58 wieder aus dem Kupplungselementen-Kühlungsraum 44 aus.

Die Funktionsweise dieser Kopplungsanordnung 1 ist wie folgt:
Zum Einrücken des Anpresselementes 54 wird durch die Steuerung 78 die Druckmittel-Zuführungsleitung 84 abgeschaltet, und statt dessen die Einrück-Druckmittelleitung 47 zugeschaltet. Daraufhin über die Einrück-Druckmittelleitung 47 in den Anpresselementen-Druckraum 46 eingeleitetes Druckmittel wird aufgrund der Rotationsbewegung des Kupplungsgehäuses 5 nach radial außen gefördert, so dass sich der im Anpresselementen-Druckraum 46 vorherrschende Fliehkraftdruck zunehmend aufbaut. Unterdessen sinkt aufgrund der Umschaltung von der Druckmittel-Zuführungsleitung 84 auf die Einrück-Druckmittelleitung 47 der Druck im Kupplungselementen-Kühlungsraum 44 kurzzeitig ab, da nunmehr keine Versorgung mit Druckmittel aus der Druckmittel-Zuführungsleitung 84 mehr erfolgt.

Wenn die Umschaltung von der Druckmittel-Zuführungsleitung 84 auf die Einrück-Druckmittelleitung 47 bei Zugbetrieb erfolgt, ist die Drehzahl der Antriebsseite, also des Kupplungsgehäuses 5, höher als die Drehzahl der Abtriebsseite, also der Getriebeeingangswelle 36. Infolge dessen liegt bei diesem Betriebszustand im Anpresselementen-Druckraum 46, welcher dem Gehäusedeckel 7 benachbart ist, im wesentlichen die Drehzahl der Antriebsseite an, während im Kupplungselementen-Kühlungsraum 44 die Drehzahl im wesentlichen durch den Torsionsschwingungsdämpfer 90 sowie das Turbinenrad 19 bestimmt ist, und somit im wesentlichen der Drehzahl der Abtriebsseite entspricht. Aufgrund dieses Drehzahlgefälles zwischen dem Anpresselementen-Druckraum 46 und dem Kupplungselementen-Kühlungsraum 44 kann zwar im radial inneren Bereich des Anpresselementen-Druckraums 46 und damit im radialen Mündungsbereich der Einrück-Druckmittelleitung 47 unmittelbar nach Umschalten der Druckmittel-Zuführungsleitung 84 auf die Einrück-Druckmittelleitung 47 zunächst ein geringeres Druckniveau anliegen als im entsprechenden Radialbereich des Kupplungselementen-Kühlungsraums 44, radial weiter außen liegt jedoch, bedingt durch den Fliehkraftdruck, im Anpresselementen-Druckraum 46 bereits ein Druckniveau vor, das höher als dasjenige im Kupplungselementen-Kühlungsraum 44 ist. Insofern wird, da die Druckmittelpassage 85 gemäß Darstellung in Fig. 1 im radial äußeren Bereich des Anpresselementes 54 ausgebildet ist, auf jeden Fall Druckmittel vom Anpresselementen-Druckraum 46 über diese Druckmittelpassage 85 in den Kupplungselementen-Kühlungsraum 44 übertreten, und dort sicher stellen, dass das beim Umschalten von der Druckmittel-Zuführungsleitung 84 auf die Einrück-Druckmittelleitung 47 im Kupplungselementen-Kühlungsraum 44 abfallende Druckniveau nicht völlig zusammen bricht, und damit das Problem von Kavitation im Kupplungselementen-Kühlungsraum 44 auslöst.

Erfolgt die Umschaltung von der Druckmittel-Zuführungsleitung 84 auf die Einrück-Druckmittelleitung 47 dagegen bei Schubbetrieb, ist die Drehzahl der Antriebsseite geringer als die Drehzahl der Abtriebsseite. Infolge dessen liegt bei diesem Betriebszustand im Anpresselementen-Druckraum 46 im Wesentlichen die geringere Drehzahl der Antriebsseite an, während im Kupplungselementen-Kühlungsraum 44 die höhere Drehzahl der Abtriebsseite vorliegt. Aufgrund dieses Drehzahlgefälles zwischen dem Kupplungselementen-Kühlungsraum 44 und dem Anpresselementen-Druckraum 46 kann im Anpresselementen-Druckraum 46 unmittelbar nach Umschalten der Druckmittel-Zuführungsleitung 84 auf die Einrück-Druckmittelleitung 47 zunächst ein geringeres Druckniveau anliegen als im entsprechenden Radialbereich des Kupplungselementen-Kühlungsraums 44, jedoch wird diesem Druckgefälle am schnellsten durch Zuführung frischen Druckmittels über die Einrück-Druckmittelleitung 47 entgegen gewirkt. Da die Einrück-Druckmittelleitung 47 im radial inneren Bereich des Anpresselementen-Druckraums 46 mündet, wird speziell in diesem Radialbereich am schnellsten ein Überdruck gegenüber dem vergleichbaren Radialbereich des Kupplungselementen-Kühlungsraums 44 aufgebaut. Dies hat zur Folge, dass für die Durchführung eines Einrückvorganges bei Schubbetrieb die Druckmittelpassage 85 mit Vorzug im inneren Radialbereich des Anpresselementes 54 vorgesehen sein könnte, wie dies in Fig. 1 durch gestrichelte Darstellung gezeigt ist. Bei weiterer Befüllung mit Druckmittel steigt das Druckniveau im Anpresselementen-Druckraum 46 gegenüber dem Kupplungselementen-Kühlungsraum 44 immer weiter an, so dass schließlich, unterstützt durch die Fliehkraftwirkung, in jedem Radialbereich des Anpresselementes 54 ein Überdruck im Anpresselementen-Druckraum 46 gegenüber dem Kupplungselementen-Kühlungsraum 44 anliegt. Insofern entfaltet die Druckmittelpassage 85 auch dann, wenn sie im äußeren Radialbereich des Anpresselementes 54 angeordnet ist, sehr rasch ihre vorteilhafte Wirkung.

Trotz einer für Schubbetrieb beim Einrückvorgang positiven Wirkung einer im inneren Radialbereich des Anpresselementes 54 vorgesehenen Druckmittelpassage 85 wird dieselbe im weitaus überwiegenden Fall ihrer Anwendungen im äußeren Radialbereich des Anpresselementes 54 positioniert sein, da das Risiko einer Kavitation bei Zugbetrieb erheblich höher ist als bei Schubbetrieb, und somit der raschen Versorgung des Kupplungselementen-Kühlungsraums 44 bei Zugbetrieb unbedingt der Vorrang einzuräumen ist, um einen Zusammenbruch des Druckes im Kupplungselementen-Kühlungsraum 44 unbedingt zu vermeiden.

Für die vorteilhafte Wirkung genügt es bereits, wenn die Druckmittelpassage 85 durch einen einzelnen Durchlass 88 gebildet ist, wie er in Fig. 1 gezeigt ist. Dieser Durchlass 88 ist mit Vorzug außerhalb des radialen Erstreckungsbereiches der Reibflächen 62 der Kupplungselemente 66, 68 angeordnet. Fig. 1 zeigt die Anordnung beispielsweise radial innerhalb der Reibflächen 62. Druckmittel, das mittels der Einrück-Druckmittelleitung 47 im radial inneren Bereich des Anpresselementen-Druckraums 46 eingeleitet worden ist, durchströmt diesen fliehkraftbedingt nach radial außen, um über den Durchlass 88 in den Kupplungselementen-Kühlungsraum 44 zu gelangen. Von dort aus strömt der zumindest wesentliche Anteil des Druckmittels den Kupplungselementen-Kühlungsraum 44 nach radual innen, um dort über die Druckmittel-Abführungsleitung 58 aus dem Kupplungsgehäuse 5 herausgeführt und dem Zwischenkühler 77 zugeführt zu werden.

Bedingt durch den sich im Anpresselementen-Druckraum 46 gegenüber dem Kupplungselementen-Kühlungsraum 44 aufbauenden Überdruck wird das Anpresselement 54 in Richtung zur Kupplungsvorrichtung 56 verlagert, und übt hierbei eine zunehmende Anpresskraft auf die axial benachbarten Kupplungselemente 66, 68 aus, die sich axial anderenseits an der Anpresselementen-Aufnahme 132 abstützen. Diese Verlagerungsbewegung des Anpresselementes 54 endet, wenn dieses sich in seiner Einrückposition befindet.

Zum Ausrücken der Kupplungsvorrichtung 56 wird, wiederum mittels der Steuerungs-und/oder Regelungsvorrichtung 78, die Einrück-Druckmittelleitung 47 abgeschaltet, die Druckmittel-Zuführungsleitung 84 dagegen zugeschaltet. Hierdurch nimmt das Druckniveau im Anpresselementen-Druckraum 46 ab, im Kupplungselementen-Kühlungsraum 44 dagegen zu. Das Anpresselement 54 wird aufgrund des zunehmenden Überdruckes im Kupplungselementen-Kühlungsraum 44 gegenüber dem Anpresselementen-Druckraum 46 von der Kupplungsvorrichtung 56 getrennt, bis es seine dem Gehäusedeckel 7 zugewandte Endposition erreicht hat, mithin also die Ausrückposition einnimmt. Über die wirksame Druckmittel-Zuführungsleitung 84 wird im radial inneren Bereich des Kupplungselementen-Kühlungsraums 44 frisches und über den Zwischenkühler 77 gekühltes Druckmittel in den Kupplungselementen-Kühlungsraum 44 eingeleitet, und zwar im Axialbereich des Pumpenrades 17, also mit axialem Abstand zum Anpresselement 54. Dieses Druckmittel ist zur Versorgung des hydrodynamischen Kreises 24 bestimmt, ein Teil hiervon durchströmt allerdings auch die Kupplungsvorrichtung 56, gegebenenfalls auch den Torsionsschwingungsdämpfer 90. Wegen des Überdruckes im Kupplungselementen-Kühlungsraum 44 gegenüber dem Anpresselementen-Druckraum 46 kann ein Teil des den Axialbereich zwischen Anpresselement 54 und Turbinenrad 19 durchströmenden Druckmittels über die Druckmittelpassage 85 in den Anpresselementen-Druckraum 46 abströmen. Da gleichzeitig die Druckmittel-Zuführungsleitung 84 weiteres Druckmittel nachliefert, ist dieser ungewollte Verlust an Druckmittel über die Druckmittelpassage 85 im Hinblick auf das Druckniveau im Kupplungselementen-Kühlungsraum 44 sowie im Hinblick auf das Druckgefälle zwischen dem Kupplungselementen-Kühlungsraum 44 und dem Anpresselementen-Druckraum 46 unkritisch. Der übrige Teil des Druckmittels im Axialbereich zwischen Anpresselement 54 und Turbinenrad 19 strömt indessen ordnungsgemäß radial innen über die Druckmittel-Abführungsleitung 58 aus dem Kupplungsgehäuse 5 in den Zwischenkühler 77.

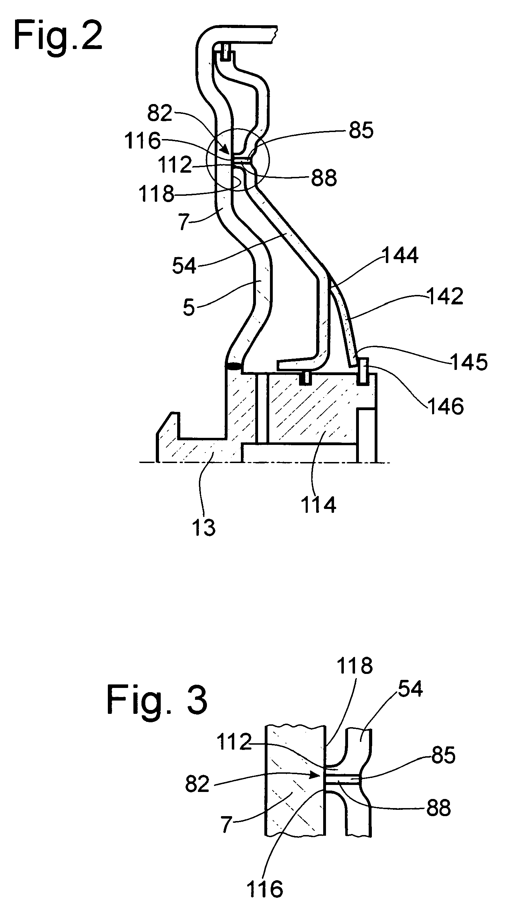

Wenn der zuvor geschilderte, ungewollte Verlust an Druckmittel über die Druckmittelpassage 85 vermieden werden soll, kann eine Weiterbildung vorgesehen sein, wie sie in Fig. 2 anschaulich dargestellt und in Fig. 3 als Einzelheit vergrößert herausgezeichnet ist. Demnach sind an der dem Gehäusedeckel 7 zugewandten Seite des Anpresselementes 54 Profilierungen 112 vorgesehen, die als Ausdrückungen aus dem Anpresselement 54 von dessen dem Gehäusedeckel 7 abgewandter Seite aus hergestellt sind, beispielsweise mittels eines Tiefziehvorganges, wobei wesentlich ist, dass der zumindest eine Durchlass 88 der Strömungspassage 85 innerhalb einer der Profilierungen 112 vorgesehen ist. Mit Vorzug sind hierbei in Umfangsrichtung drei Profilierungen 112 mit jeweils zumindest im Wesentlichen gleichen Winkelabständen vorgesehen, jedoch ist selbstverständlich auch eine hiervon abweichende Anzahl an Profilierungen 112 sowie deren Positionierung am Anpresselement 54 denkbar. Nicht zwangsläufig muss in jeder der Profilierungen 112 ein Durchlass 88 enthalten sein. Mit besonderem Vorzug ist in lediglich einer der Profilierungen 112 ein Durchlass 88 ausgebildet.

Wenn das Anpresselement 54 seine Ausrückposition zumindest im Wesentlichen erreicht hat, kommen die Profilierungen 112 mit freien Enden 116 an der benachbarten, dem Anpresselement 54 zugewandten Seite 118 des Gehäusedeckels 7 in Anlage. Hierdurch entsteht eine hinreichende Abdichtung des zumindest einen Durchlasses 88, den bei in Ausrückposition stehendem Anpresselement 54 lediglich noch eine Restleckage durchsickern kann. Sobald beim Einrücken der Kupplungsvorrichtung 56 allerdings das Anpresselement 54 vom Gehäusedeckel 7 entfernt ist, wird der Durchlass 88 wieder frei, um von Druckmittel in Richtung zum Kupplungselementen-Raum 44 durchströmt zu werden. Aufgrund dieser Funktionalität sind die Profilierungen 112 demnach als Verschlussvorrichtung 82 für den Durchlass 88 wirksam.

Fig. 2 zeigt außerdem ein dem Anpresselement 54 zugeordnetes Vorspannelement 142 in Form einer Axialfeder. Das Vorspannelement 142 stützt sich mit seinem dem Anpresselement 54 zugewandten Ende 144 unmittelbar am Anpresselement 54 ab, mit seinem vom Anpresselement 54 abgewandten Ende 145 dagegen an einem Widerlager 146, das in einer Gehäusenabe 114 des Gehäuses 5 ortsfest aufgenommen ist. Das Vorspannelement 142 ist mit Vorzug in Richtung zum Gehäusedeckel 7 wirksam, und presst hierdurch die Profilierungen 112 in Ausrückposition des Anpresselementes 54 gegen die demselben zugewandte Seite 118 des Gehäusedeckels 7. Als weiterer Zweck des Vorspannelementes 142 ist zu vermerken, dass dessen Vorspannkraft beim Einrücken des Anpresselementes 54 überwunden werden muss, wodurch sich eine nochmals verbesserte Regelbarkeit des Anpresselementes 54 beim Einrücken ergibt.

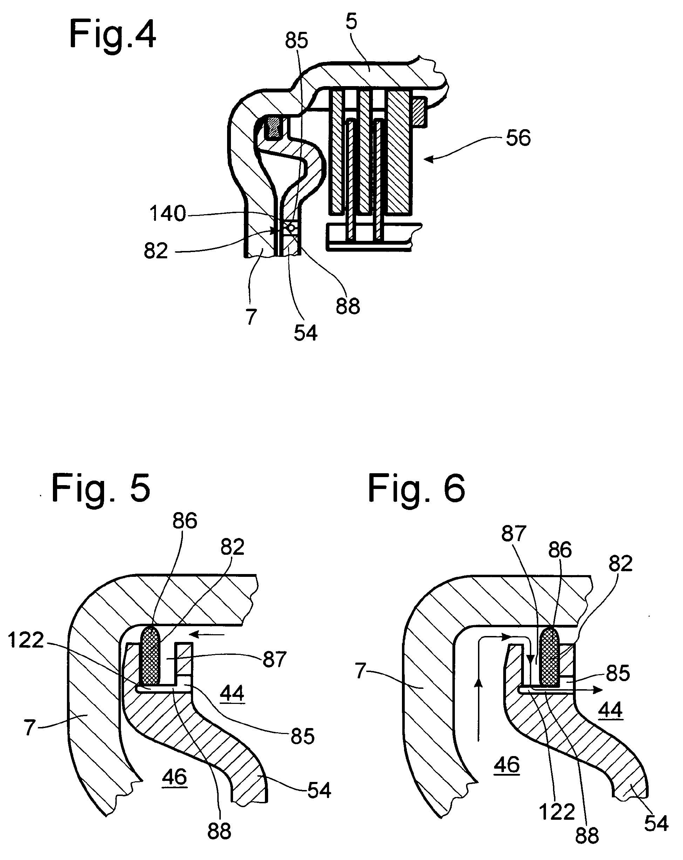

Die in den Fig. 2 und 3 gezeigte Verschlussvorrichtung 82 kann auch auf andere Weise ausgebildet sein. So zeigt Fig. 4 eine Ausführung, nach welcher der im Anpresselement 54 vorgesehene Durchlass 88 der Strömungspassage 85 eine Ventileinrichtung 140 aufnimmt, die eine Durchströmung in einer ersten Richtung, nämlich vom Anpresselementen-Druckraum 46 in den Kupplungselementen-Kühlungsraum 44, zulässt, eine Durchströmung in Gegenrichtung allerdings sperrt. Mit Vorzug ist die Ventileinrichtung 140 als Rückschlagventil ausgebildet.

Bei den bisher beschriebenen Figuren ist die Druckmittelpassage 85 stets durch einen Durchlass 88 im Anpresselement 54 gebildet. Ebenso kann aber auch einer dem Anpresselement 54 zugeordneten Abdichtung 86 ein Durchlass 88 zugeordnet sein, der als Druckmittelpassage 85 wirksam ist. Fig. 5 und 6 zeigen eine Ausführung, nach welcher die in Fig. 1 mit dem Bezugszeichen 86 benannte Abdichtung im Kopf des Anpresselementes 54 als Verschlussvorrichtung 82 für den Durchlass 88 der Druckmittelpassage 85 wirksam ist, der durch eine im Kopf des Anpresselementes 54 vorgesehene Materialaussparung 122 gebildet ist. Die Materialaussparung 122 endet in Richtung zum Anpresselementen-Druckraum 46 im Anpresselement 54, während sie in Gegenrichtung, also zum Kupplungselementen-Kühlungsraum 44 hin, offen ist.

Fig. 5 zeigt hierbei die Situation bei in Ausrückposition stehendem Anpresselement 54, Fig. 6 dagegen bei in Einrückposition stehendem Anpresselement 54. In Ausrückposition des Anpresselementes 54 herrscht im Kupplungselementen-Kühlungsraum 44 ein Überdruck gegenüber dem Anpresselementen-Druckraum 46. Dadurch bedingt, wird die Abdichtung 86, wie Fig. 5 zeigt, in ihre dem Gehäusedeckel 7 zugewandte Endposition verlagert, und dadurch der Durchlass 88 gegen Druckmittel, das vom Kupplungselementen-Kühlungsraum 44 stammt und in den Anpresselementen-Druckraum 46 einzudringen sucht, gesperrt. In Einrückposition des Anpresselementes 54 herrscht dagegen im Anpresselementen-Druckraum 46 ein Überdruck gegenüber dem Kupplungselementen-Kühlungsraum 44. Dadurch wird die Abdichtung 86, wie Fig. 6 zeigt, in ihre von dem Gehäusedeckel 7 abgewandte Endposition verlagert, und dadurch der Durchlass 88 für Druckmittel, das vom Anpresselementen-Druckraum 46 stammt und in den Kupplungselementen-Kühlungsraum 44 einzudringen sucht, frei gegeben.

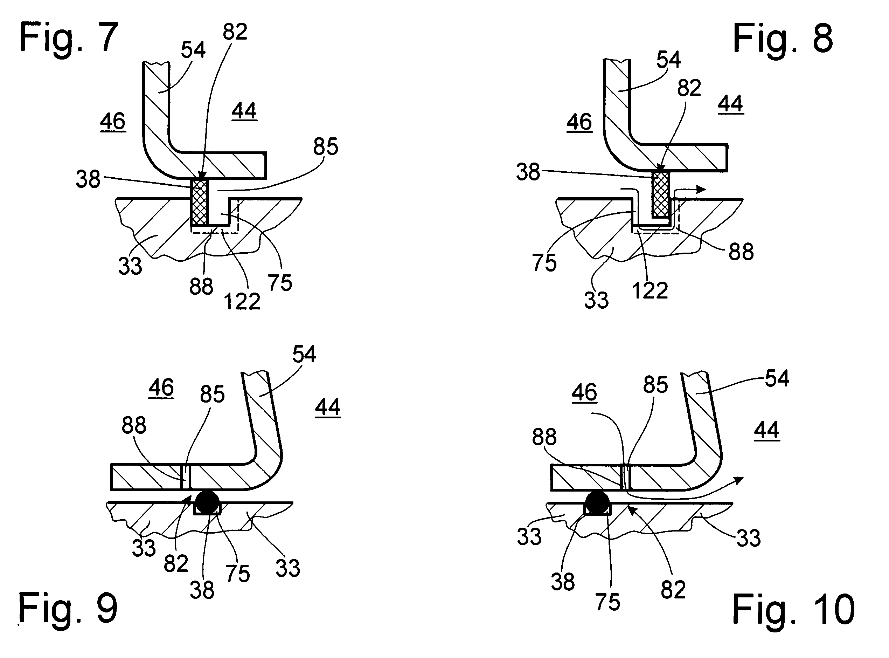

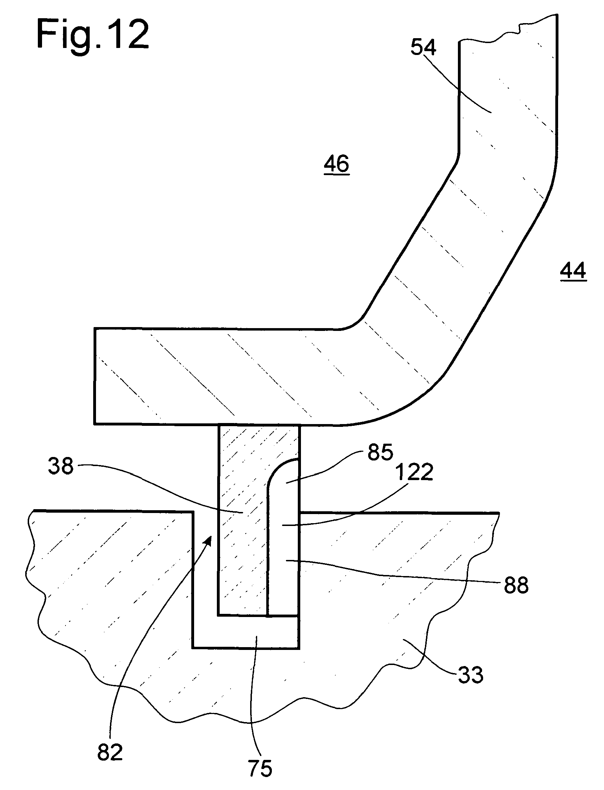

Eine Ausführung mit vergleichbarer Funktionalität behandeln die Fig. 7 bis 10, allerdings jeweils mit einer Abdichtung 38 am Fuß des Anpresselementes 54, die gemäß Fig. 1 in je einer Dichtungsausnehmung 75 der Trägernabe 33 eingesetzt ist, und als Verschlußvorrichtung 82 dient. Bei der Ausführung nach Fig. 7 oder 8 ist die als Durchlass 88 der Druckmittelpassage 85 wirksame Materialaussparung 122 allerdings, abweichend zur Ausführung nach Fig. 5 oder 6, nicht im Anpresselement 54 ausgebildet, sondern in dem mit dem Anpresselement 54 in Wirkverbindung stehenden Bauteil, also mit der Trägernabe 33. Fig. 7 zeigt hierbei, ebenso wie Fig. 9, jeweils den Schaltzustand der Verschlussvorrichtung 82 in Ausrückposition des Anpresselementes 54, Fig. 8 dagegen ebenso wie Fig. 10 in Einrückposition. Fig. 12 zeigt das in den Fig. 7 und 8 erläuterte Wirkprinzip ebenfalls, allerdings mit Ausbildung der Materialaussparung 122 in der Abdichtung 38.

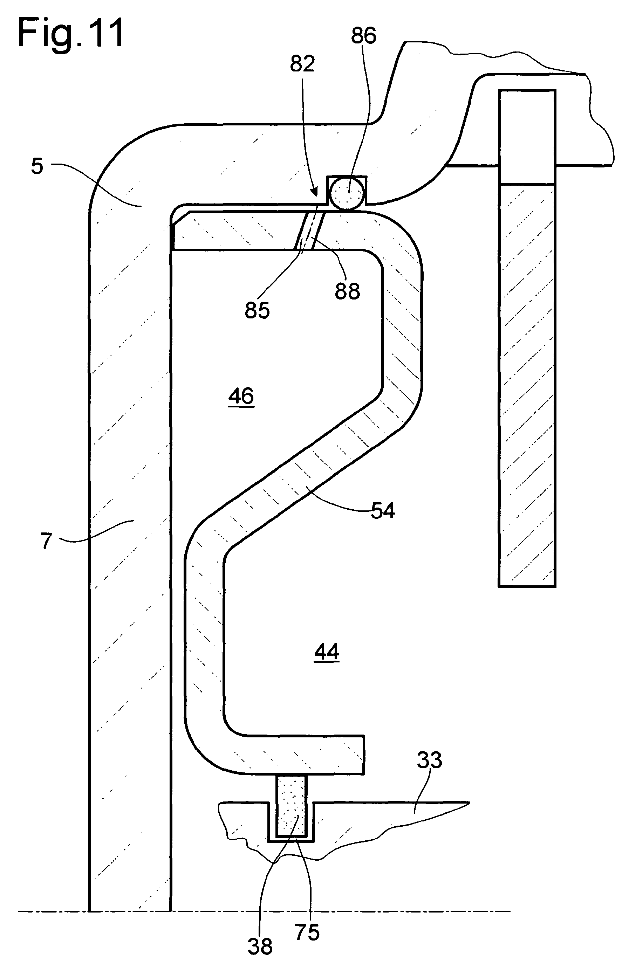

In Fig. 9 oder 10 ist die Abdichtung 38 ebenfalls in der Dichtungsausnehmung 75 der Trägernabe 33 angeordnet, allerdings ist die Druckmittelpassage 85 hier im Fuß des Anpresselementes 54 vorgesehen, und zwar als Durchlass 88, der bei der Verlagerung des Anpresselementes 54 zwischen Ein- und Ausrückpositon über die Dichtung 38 hinwegbewegt wird, und dadurch die Verbindung des zum Anpresselementen-Druckraums 46 führenden Durchlasses 88 zum Kupplungselementen-Kühlungsraum 44 sperrt, oder freigibt. Fig. 11 zeigt das Prinzip der Fig. 9 und 10 für den Kopf des Anpresselementes 54, mit Anordnung der Abdichtung 87 in einem Bauteil des Kupplungsgehäuses 5, insbesondere hierbei des Gehäusedeckels 7.

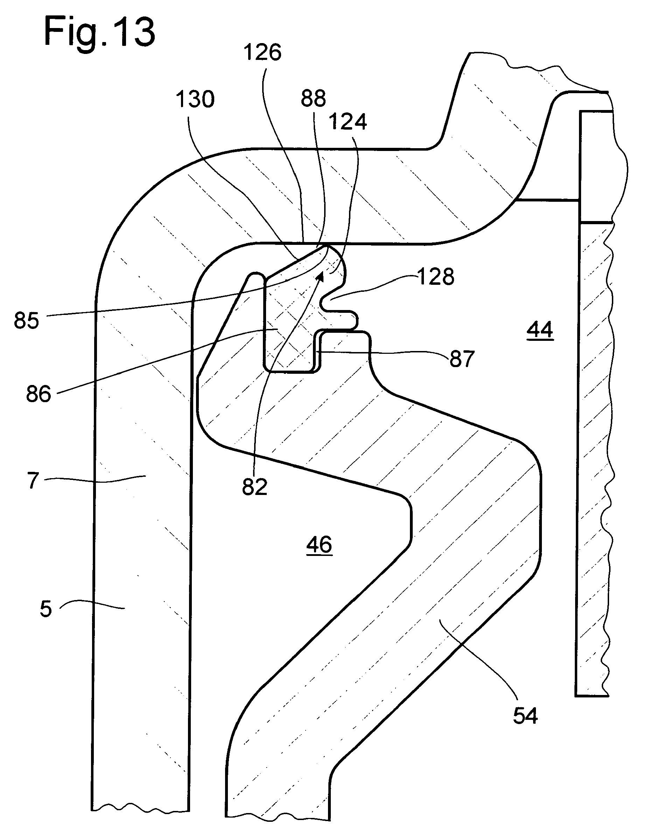

Figur 13 zeigt eine besondere Ausführungsform einer als Verschlussvorrichtung 82 für einen Durchlass 88 einer Druckmittelpassage 85 dienenden Abdichtung 86, angeordnet im Kopf des Anpresselementes 54, und zwar hierbei in der Anpresselementennut 87. Die Abdichtung 86 verfügt hierzu an ihrer radialen Außenseite über eine Dichtlippe 124, die an einer der Abdichtung 86 zugewandten Innenseite 126 des Kupplungsgehäuses 5, insbesondere hierbei des Gehäusedeckels 7, in Anlage gehalten ist, wenn in Ausrückposition des Anpresselementes 54 im Kupplungselementen-Kühlungsraum 44 ein Überdruck gegenüber dem Anpresselementen-Druckraum 46 vorliegt. Die Dichtlippe 124 ist hierzu so genormt, dass sie mit ihrer radialen Innenseite eine für den Überdruck im Kupplungselementen-Kühlungsraum 44 zugängliche erste Druckausnehmung 128 begrenzt. Eine zweite Druckausnehmung 130 ist an der vom Kupplungselementen-Kühlungsraum 44 abgewandten Seite der Abdichtung 86 vorgesehen. Die Dichtlippe 124 wird aufgrund der zweiten Druckausnehmung 130 bei einem Überdruck im Anpresselementen-Druckraum 46 gegenüber dem Kupplungselementen-Kühlungsraum 44, also in Einrückposition des Anpresselementes 54, derart durch Eigenverformung ausgerichtet, dass sie sich nach radial innen in Richtung zur ersten Druckausnehmung 128 verlagert, und dadurch die Freigabe des Durchlasses 88 radial zwischen der Innenseite 126 des Kupplungsgehäuses 5 und der Abdichtung 86 bewirkt.

## Patentansprüche

1. Kopplungsanordnung mit einem Kupplungsgehäuse (5), das zumindest eine Kupplungsvorrichtung (56) umfasst, die aus wenigstens einem Kupplungselement (66, 68), zumindest einem Anpresselement (54), das in Einrückposition mit dem Kupplungselement (66, 68) in Wirkverbindung bringbar und in Ausrückposition von dem Kupplungselement (66, 68) trennbar ist, sowie aus wenigstens einer die Kraftwirkung des Anpresselementes (54) aufnehmenden Anpresselementen-Aufnahme (132) besteht, wobei das Kupplungsgehäuse (5) durch das Anpresselement (54) in zumindest zwei Räume trennbar ist, nämlich in einen Anpresselementen-Druckraum (46) mit wenigstens einer für den Ein- oder Ausrückvorgang zu- oder abschaltbaren Einrück-Druckmittelleitung (47), und in einen Kupplungselementen-Kühlungsraum (44) mit einer Druckmittel-Zuführungsleitung (84) und einer Druckmittel-Abführungsleitung (58), wobei dem Anpresselement (54) eine zumindest in dessen Einrückposition wirksame Druckmittelpassage (85) zwischen dem Anpresselementen-Druckraum (46) und dem Kupplungselementen-Kühlungsraum (44) zugeordnet ist,
**dadurch gekennzeichnet,**
**dass** bei zugeschalteter Einrück-Druckmittelleitung (47) des Anpresselementen-Druckraums (46) die Druckmittel-Zuführungsleitung (84) abgeschaltet ist, und somit die Druckmittelpassage (85) zumindest im wesentlichen den einzigen Druckmittel-Versorgungszugang zum Kupplungselementen-Kühlungsraum (44) bildet, während bei abgeschalteter Einrück-Druckmittelleitung (47) des Anpresselementen-Druckraums (46) die Druckmittel-Zuführungsleitung (58) zugeschaltet ist.

2. Kopplungsanordnung nach Anspruch 1,
**dadurch gekennzeichnet,**
**dass** die Druckmittel-Zuführungsleitung (84) in größerem Abstand zum Anpresselement (54) als die Druckmittel-Abführungsleitung (58) angeordnet ist.

3. Kopplungsanordnung nach Anspruch 1 oder 2 mit einem Kupplungselement (66, 68), das gemeinsam mit dem Anpresselement (54) und/oder zumindest einem weiteren Kupplungselement (66, 68) über wenigstens eine Reibfläche (62) verfügt, und mit Ausbildung der Druckmittelpassage (85) durch wenigstens einen Durchlass (88) im Anpresselement (54),
**dadurch gekennzeichnet,**
**dass** der wenigstens eine Durchlass (88) mit Radialversatz zur wenigstens einen Reibfläche (62) vorgesehen ist.

4. Kopplungsanordnung nach Anspruch 1,2 oder 3 mit Ausbildung der Druckmittelpassage (85) durch wenigstens einen Durchlass (88) im Anpresselement (54),
**dadurch gekennzeichnet,**
**dass** dem Durchlass (88) eine Verschlussvorrichtung (82) zugeordnet ist.

5. Kopplungsanordnung nach Anspruch 4,
**dadurch gekennzeichnet,**
**dass** die Verschlussvorrichtung (82) bei Einstellung des Anpresselementes (54) in seiner Einrückposition zumindest im wesentlichen freigegeben ist, bei Einstellung des Anpresselementes (54) in seiner Ausrückposition dagegen zumindest im wesentlichen einen Verschluss des Durchlasses (88) bewirkt.

6. Kopplungsanordnung nach Anspruch 5 mit einem Kupplungsgehäuse, das über einen antriebsseitigen Gehäusedeckel (7) verfügt,
**dadurch gekennzeichnet,**
**dass** das Anpresselement (54) zur Bildung der Verschlussvorrichtung (82) bevorzugt im Umgebungsbereich eines Durchlasses (88) über zum benachbarten Gehäusedeckel (7) überstehende Profilierungen (112) verfügt, die bei Einstellung des Anpresselementes (54) in seiner Ausrückposition zur Axialanlage an diesem Gehäusedeckel (7) kommen.

7. Kopplungsanordnung nach Anspruch 4,
**dadurch gekennzeichnet,**
**dass** die Verschlussvorrichtung (82) durch eine Ventileinrichtung (140) gebildet ist, die eine Durchströmung aus dem Anpresselementen-Druckraum (46) zum Kupplungselementen-Kühlungsraum (44) zulässt, eine Durchströmung in Gegenrichtung aber sperrt.

8. Kopplungsanordnung nach Anspruch 1 oder 2 und 4 mit einem Anpresselement (54), das über wenigstens eine Abdichtung (86, 75) mit zumindest einem Bauteil des Kupplungsgehäuses (5), wie dem Gehäusedeckel (7), und/oder zumindest einem Bauteil der Kupplungsvorrichtung (56), wie einer Nabe (33), in Wirkverbindung steht, und gegenüber wenigstens einem dieser Bauteile (7, 33) verlagerbar ist,
**dadurch gekennzeichnet,**
**dass** die Verschlussvorrichtung (82) durch eine Abdichtung (86, 75) gebildet ist, die dem Durchlass (88) zugeordnet ist, und bei in seiner Einrückposition stehendem Anpresselement (54) einen Zugang des Anpresselementen-Druckraums (46) zum Durchlass (88) freigibt, bei in seiner Ausrückposition stehendem Anpresselement (88) dagegen sperrt.

9. Kopplungsanordnung nach Anspruch 8,
**dadurch gekennzeichnet,**
**dass** der Durchlass (88) durch eine gegenüber dem Anpresselementen-Druckraum (46) verschlossene, aber im Kupplungselementen-Kühlungsraum (44) mündende Materialaussparung (122) im Anpresselement (54) gebildet ist.

10. Kopplungsanordnung nach Anspruch 8,
**dadurch gekennzeichnet,**
**dass** der Durchlass (88) durch eine gegenüber dem Anpresselementen-Druckraum (46) verschlossene, aber im Kupplungselementen-Kühlungsraum (44) mündende Materialaussparung (122) in einem dem Anpresselement (54) benachbarten Bauteil (7, 33) des Kupplungsgehäuses (5) oder der Kupplungsvorrichtung (5) gebildet ist.

11. Kopplungsanordnung nach Anspruch 8,
**dadurch gekennzeichnet,**
**dass** der Durchlass (88) durch eine gegenüber dem Anpresselementen-Druckraum (46) abdichtbare, aber im Kupplungselementen-Kühlungsraum (44) mündende Aussparung (122) in der Abdichtung (86, 75) gebildet ist.

12. Kopplungsanordnung nach Anspruch 8,
**dadurch gekennzeichnet,**
**dass** die Abdichtung (86) an ihrer dem Durchlass (88) zugewandten Seite mit einer Dichtlippe (124) versehen ist, die eine bezüglich ihrer Eigenverformung vom Druckgefälle zwischen dem Anpresselementen-Druckraum (46) und dem Kupplungselementen-Kühlungsraum (44) abhängige Eigenverformung erfährt.

13. Kopplungsanordnung nach Anspruch 12,
**dadurch gekennzeichnet,**
**dass** Dichtlippe (124) der Abdichtung (86) infolge eines Überdruckes im Anpresselementen-Druckraum (46) gegenüber dem Kupplungselementen-Kühlungsraum (44) bei in seiner Einrückposition stehendem Anpresselement (54) durch Abhub vom benachbarten Bauteil (7) des Kupplungsgehäuses (5) den Durchlass (88) freigibt, während bei in seiner Ausrückposition stehendem Anpresselement (54) die Dichtlippe (124) der Abdichtung (86) infolge eines Überdruckes im Kupplungselementen-Kühlungsraum (44) gegenüber dem Anpresselementen-Druckraum (46) durch Anpressung an das benachbarte Bauteil (7) des Kupplungsgehäuses (5) den Durchlass (88) sperrt.

14. Kopplungsanordnung nach einem der Ansprüche 1 bis 13,
**dadurch gekennzeichnet,**
**dass** die Druckmittelpassage (85) im radial äußeren Bereich des Anpresselementes (54) vorgesehen ist.

15. Kopplungsanordnung nach einem der Ansprüche 1 bis 13,
**dadurch gekennzeichnet,**
**dass** die Druckmittelpassage (85) im radial inneren Bereich des Anpresselementes (54) vorgesehen ist.

16. Kopplungsanordnung nach einem der Ansprüche 1 bis 15,
**dadurch gekennzeichnet,**
**dass** dem Anpresselement (54) ein in Richtung zur Einrückposition oder ein in Richtung zur Ausrückposition wirksames Vorspannelement (142) zugeordnet ist, das sich mit seinem vom Anpresselement (54) abgewandten Ende (144)
an einem Widerlager (146) abstützt.

17. Kopplungsanordnung nach Anspruch 16,
**dadurch gekennzeichnet,**
**dass** das Vorspannelement (142) das Anpresselement (54) in Richtung zur Ausrückposition des Anpresselementes (54) belastet.

## Claims

1. Coupling arrangement with a coupling housing (5) which comprises at least one coupling device (56) which consists of at least one coupling element (66, 68), at least one press-on element (54), which can be brought into operative connection with the coupling element (66, 68) in the engagement position and can be separated from the coupling element (66, 68) in the disengagement position, and of at least one press-on-element receptacle (132) receiving the dynamic effect of the press-on element (54), wherein the coupling housing (5) can be separated by the press-on element (54) into at least two chambers, namely into a press-on-element pressure chamber (46) with at least one engagement pressure-medium line (47) which can be switched on or off for the engagement or disengagement operation, and into a coupling-element cooling chamber (44) with a pressure-medium supply line (84) and a pressure-medium removal line (58), wherein the press-on element (54) is assigned a pressure-medium passage (85), which is effective at least in the engagement position of said press-on element, between the press-on-element pressure chamber (46) and the coupling-element cooling chamber (44), **characterized in that**, when the engagement pressure-medium line (47) of the press-on-element pressure chamber (46) is switched on, the pressure-medium supply line (84) is switched off, and therefore the pressure-medium passage (85) at least substantially forms the single pressure-medium supply access to the coupling-element cooling chamber (44) while, when the engagement pressure-medium line (47) of the press-on-element pressure chamber (46) is switched off, the pressure-medium supply line (58) is switched on.

2. Coupling arrangement according to Claim 1, **characterized in that** the pressure-medium supply line (84) is arranged at a greater distance from the press-on element (54) than the pressure-medium removal line (58).

3. Coupling arrangement according to Claim 1 or 2 with a coupling element (66, 68) which, together with the press-on element (54) and/or at least one further coupling element (66, 68), has at least one friction surface (62), and with formation of the pressure-medium passage (85) by at least one passage (88) in the press-on element (54), **characterized in that** the at least one passage (88) is provided with a radial offset with respect to the at least one friction surface (62).

4. Coupling arrangement according to Claim 1, 2 or 3 with formation of the pressure-medium passage (85) by at least one passage (88) in the press-on element (54), **characterized in that** the passage (88) is assigned a closure device (82).

5. Coupling arrangement according to Claim 4, **characterized in that**, when the press-on element (54) is adjusted into the engagement position thereof, the closure device (82) is at least substantially released, whereas, when the press-on element (54) is adjusted into the disengagement position thereof, said closure device at least substantially closes the passage (88).

6. Coupling arrangement according to Claim 5 with a coupling housing which has a housing cover (7) on the drive side, **characterized in that**, in order to form the closure device (82), the press-on element (54) has, preferably in the region surrounding a passage (88), profiled structures (112) which protrude in relation to the adjacent housing cover (7) and, when the press-on element (54) is adjusted into the disengagement position thereof, come to bear axially against said housing cover (7).

7. Coupling arrangement according to Claim 4, **characterized in that** the closure device (82) is formed by a valve mechanism (140) which permits a flow from the press-on-element pressure chamber (46) to the coupling-element cooling chamber (44), but blocks a flow in the opposite direction.

8. Coupling arrangement according to Claim 1 or 2 and 4 with a press-on element (54) which is operatively connected via at least one seal (86, 75) to at least one component of the coupling housing (5), such as the housing cover (7), and/or to at least one component of the coupling device (56), such as a hub (33), and can be displaced in relation to at least one of said components (7, 33), **characterized in that** the closure device (82) is formed by a seal (86, 75) which is assigned to the passage (88) and, when the press-on element (54) is in the engagement position thereof, releases access of the press-on-element pressure chamber (46) to the passage (88) but blocks said access when the press-on element (88) is in the disengagement position thereof.

9. Coupling arrangement according to Claim 8, **characterized in that** the passage (88) is formed by a material cutout (122) in the press-on element (54), said material cutout being closed in relation to the press-on-element pressure chamber (46) but opening into the coupling-element cooling chamber (44).

10. Coupling arrangement according to Claim 8, **characterized in that** the passage (88) is formed by a material cutout (122), which is closed in relation to the press-on-element pressure chamber (46) but opens into the coupling-element cooling chamber (44), in a component (7, 33) of the coupling housing (5) or of the coupling device (56), which component is adjacent to the press-on element (54).

11. Coupling arrangement according to Claim 8, **characterized in that** the passage (88) is formed by a cutout (122) in the seal (86, 75), which cutout can be sealed in relation to the press-on-element pressure chamber (46) but opens into the coupling-element cooling chamber (44).

12. Coupling arrangement according to Claim 8, **characterized in that** that side of the seal (86) which faces the passage (88) is provided with a sealing lip (124) which undergoes a characteristic deformation which, with regard to the characteristic deformation thereof, is dependent on the pressure difference between the press-on-element pressure chamber (46) and the coupling-element cooling chamber (44).

13. Coupling arrangement according to Claim 12, **characterized in that** the sealing lip (124) of the seal (86) releases the passage (88) by lifting off from the adjacent component (7) of the coupling housing (5) as a result of a positive pressure in the press-on-element pressure chamber (46) in relation to the coupling-element cooling chamber (44) when the press-on element (54) is in the engagement position thereof while, when the press-on element (54) is in the disengagement position thereof, the sealing lip (124) of the seal (86) blocks the passage (88) by pressing against the adjacent component (7) of the coupling housing (5) as a result of a positive pressure in the coupling-element cooling chamber (44) in relation to the press-on-element pressure chamber (46).

14. Coupling arrangement according to one of Claims 1 to 13, **characterized in that** the pressure-medium passage (85) is provided in the radially outer region of the press-on element (54).

15. Coupling arrangement according to one of Claims 1 to 13, **characterized in that** the pressure-medium passage (85) is provided in the radially inner region of the press-on element (54).

16. Coupling arrangement according to one of Claims 1 to 15, **characterized in that** the press-on element (54) is assigned a prestressing element (142) which is effective in the direction of the engagement position or a prestressing element (142) which is effective in the direction of the disengagement position, said prestressing element being supported at the end (144) thereof which faces away from the press-on element (54) against an abutment (146).

17. Coupling arrangement according to Claim 16, **characterized in that** the prestressing element (142) loads the press-on element (54) in the direction of the disengagement position of the press-on element (54).

## Revendications

1. Agencement d'accouplement comprenant un boîtier d'embrayage (5), qui comprend au moins un dispositif d'embrayage (56), qui se compose d'au moins un élément d'embrayage (66, 68), d'au moins un élément de pressage (54) qui peut être amené en liaison fonctionnelle dans une position d'embrayage avec l'élément d'embrayage (66, 68) et qui peut être séparé de l'élément d'embrayage (66, 68) dans une position de débrayage, ainsi que d'au moins un logement pour éléments de pressage (132) recevant l'application de la force de l'élément de pressage (54), le boîtier d'embrayage (5) pouvant être séparé par l'élément de pressage (54) en au moins deux espaces, à savoir en un espace de pression d'éléments de pressage (46) ayant au moins une conduite de fluide sous pression d'embrayage (47) pouvant être connectée ou déconnectée pour l'opération d'embrayage ou de débrayage, et en un espace de refroidissement d'éléments d'embrayage (44) avec une conduite d'alimentation en fluide sous pression (84) et une conduite d'évacuation de fluide sous pression (58), un passage de fluide sous pression (85) agissant au moins dans la position d'embrayage de l'élément de pressage (54) étant associé à ce dernier entre l'espace de pression d'éléments de pressage (46) et l'espace de refroidissement d'éléments d'embrayage (44),
**caractérisé en ce que**
lorsque la conduite de fluide sous pression d'embrayage (47) de l'espace de pression d'éléments de pressage (46) est connectée, la conduite d'alimentation en fluide sous pression (84) est déconnectée, et ainsi le passage de fluide sous pression (85) forme au moins essentiellement l'accès d'alimentation en fluide sous pression à l'espace de refroidissement d'éléments d'embrayage (44), tandis que lorsque la conduite de fluide sous pression d'embrayage (47) de l'espace de pression d'éléments de pressage (46) est déconnectée, la conduite d'alimentation en fluide sous pression (58) est connectée.

2. Agencement d'accouplement selon la revendication 1,
**caractérisé en ce que**
la conduite d'alimentation en fluide sous pression (84) est disposée à une plus grande distance de l'élément de pressage (54) que la conduite d'évacuation de fluide sous pression (58).

3. Agencement d'accouplement selon la revendication 1 ou 2, comprenant un élément d'embrayage (66, 68), qui dispose, conjointement avec l'élément de pressage (54) et/ou au moins avec un autre élément d'embrayage (66, 68), d'au moins une surface de friction (62), le passage de fluide sous pression (85) étant réalisé par au moins un passage (88) dans l'élément de pressage (54),
**caractérisé en ce que**
l'au moins un passage (88) est prévu avec un décalage radial par rapport à l'au moins une surface de friction (62).

4. Agencement d'accouplement selon la revendication 1, 2 ou 3, le passage de fluide sous pression (85) étant réalisé par au moins un passage (88) dans l'élément de pressage (54),
**caractérisé en ce que**
l'on associe au passage (88) un dispositif de fermeture (82).

5. Agencement d'accouplement selon la revendication 4,
**caractérisé en ce que**
le dispositif de fermeture (82) est au moins sensiblement libéré lors de l'ajustement de l'élément de pressage (54) dans sa position d'embrayage, et par contre lors de l'ajustement de l'élément de pressage (54) dans sa position de débrayage, provoque au moins essentiellement une fermeture du passage (88).

6. Agencement d'accouplement selon la revendication 5, comprenant un boîtier d'embrayage qui dispose d'un couvercle de boîtier (7) du côté de l'entraînement,
**caractérisé en ce que**
l'élément de pressage (54), pour former le dispositif de fermeture (82), dispose de préférence dans la région périphérique d'un passage (88), de profilages (112) saillant vers le couvercle de boîtier adjacent (7), lesquels, lors de l'ajustement de l'élément de pressage (54) dans sa position de débrayage, viennent en appui axial contre ce couvercle de boîtier (7).

7. Agencement d'accouplement selon la revendication 4,
**caractérisé en ce que**
le dispositif de fermeture (82) est formé par un dispositif de soupape (140) qui permet un écoulement hors de l'espace de pression d'éléments de pressage (46) vers l'espace de refroidissement d'éléments d'embrayage (44), mais qui bloque un écoulement dans le sens inverse.

8. Agencement d'accouplement selon la revendication 1 ou 2 et 4, comprenant un élément de pressage (54), qui est en liaison fonctionnelle par le biais d'au moins une garniture d'étanchéité (86, 75) avec au moins un composant du boîtier d'embrayage (5), comme le couvercle du boîtier (7) et/ou avec au moins un composant du dispositif d'embrayage (56), comme un moyeu (33), et qui peut être déplacé par rapport à au moins l'un de ces composants (7, 33),
**caractérisé en ce que**
le dispositif de fermeture (82) est formé par une garniture d'étanchéité (86, 75) qui est associée au passage (88), et qui libère, lorsque l'élément de pressage (54) est dans sa position d'embrayage, un accès de l'espace de pression d'éléments de pressage (46) au passage (88), mais qui le bloque lorsque l'élément de pressage (54) est dans sa position de débrayage.

9. Agencement d'accouplement selon la revendication 8,
**caractérisé en ce que**
le passage (88) est formé par un évidement de matière (122) dans l'élément de pressage (54), qui est fermé par rapport à l'espace de pression d'éléments de pressage (46) mais qui débouche dans l'espace de refroidissement d'éléments d'embrayage (44).

10. Agencement d'accouplement selon la revendication 8,
**caractérisé en ce que**
le passage (88) est formé par un évidement de matière (122) fermé par rapport à l'espace de pression d'éléments de pressage (46) mais débouchant dans l'espace de refroidissement d'éléments d'embrayage (44), dans un composant (7, 33) du boîtier d'embrayage (5) ou du dispositif d'embrayage (56) adjacent à l'élément de pressage (54).

11. Agencement d'accouplement selon la revendication 8,
**caractérisé en ce que**
le passage (88) est formé par un évidement (122) dans la garniture d'étanchéité (86, 75) pouvant être fermé hermétiquement par rapport à l'espace de pression d'éléments de pressage (46) mais débouchant dans l'espace de refroidissement d'éléments d'embrayage (44).

12. Agencement d'accouplement selon la revendication 8,
**caractérisé en ce que**
la garniture d'étanchéité (86) est pourvue, sur son côté tourné vers le passage (88), d'une lèvre d'étanchéité (124) qui subit par rapport à sa déformation propre, une déformation propre dépendant du gradient de pression entre l'espace de pression d'éléments de pressage (46) et l'espace de refroidissement d'éléments d'embrayage (44).

13. Agencement d'accouplement selon la revendication 12,
**caractérisé en ce que**
la lèvre d'étanchéité (124) de la garniture d'étanchéité (86), suite à une surpression dans l'espace de pression d'éléments de pressage (46) par rapport à l'espace de refroidissement d'éléments d'embrayage (44), libère le passage (88) lorsque l'élément de pressage (54) se trouve dans sa position d'embrayage, en se soulevant du composant adjacent (7) du boîtier d'embrayage (5), tandis que lorsque l'élément de pressage (54) se trouve dans sa position de débrayage, la lèvre d'étanchéité (124) de la garniture d'étanchéité (86), du fait d'une surpression dans l'espace de refroidissement d'éléments d'embrayage (44) par rapport à l'espace de pression d'éléments de pressage (46), bloque le passage (88) en pressant contre le composant adjacent (7) du boîtier d'embrayage (5).

14. Agencement d'accouplement selon l'une quelconque des revendications 1 à 13,
**caractérisé en ce que**
le passage de fluide sous pression (85) est prévu dans la région radialement extérieure de l'élément de pressage (54).

15. Agencement d'accouplement selon l'une quelconque des revendications 1 à 13,
**caractérisé en ce que**
le passage de fluide sous pression (85) est prévu dans la région radialement interne de l'élément de pressage (54).

16. Agencement d'accouplement selon l'une quelconque des revendications 1 à 15,
**caractérisé en ce que**
l'on associe à l'élément de pressage (54) un élément de précontrainte (142) agissant dans la direction de la position d'embrayage ou dans la direction de la position de débrayage, lequel s'appuie avec son extrémité (144) opposée à l'élément de pressage (54) contre une butée (146).

17. Agencement d'accouplement selon la revendication 16,
**caractérisé en ce que**
l'élément de précontrainte (142) sollicite l'élément de pressage (54) dans la direction de la position de débrayage de l'élément de pressage (54).
